# EUROPÄISCHE PATENTANMELDUNG

(11) **EP 1 548 428 A1**
(43) Veröffentlichungstag der Anmeldung: **29.06.2005**
(21) Anmeldenummer: 03028997.9
(22) Anmeldetag: 17.12.2003
(51) Int. Cl.: G01N 27/401, G01N 27/36

(54) **Bedruckte Referenzsysteme und Verfahren zu deren Herstellung**

(71) Anmelder: Hamilton Bonaduz AG, CH-7402 Bonaduz (CH)
(72) Erfinder: Die Erfindernennung liegt noch nicht vor
(74) Vertreter: Dey, Michael, Dr.

(57) **Zusammenfassung**

Die vorliegende Anmeldung betrifft eine bedruckte Bezugselektrode sowie ein Verfahren zu deren Herstellung, wobei die Bezugselektrode eine Kammer (11) umfasst, die einen Bezugselektrolyten aufweist, wobei ein Teil der Wandung der Kammer aus porösem Material (10) zum Inkontaktbringen der Bezugselektrode mit einem Messmedium ausgebildet ist, und wobei die Kammer unter Überdruck steht, welches dadurch gekennzeichnet ist, dass man zur Erzeugung des Überdrucks in der Bezugselektrode ein Gas oder/und eine Flüssigkeit durch das poröse Material der Wandung in die Kammer einbringt, oder den Bezugselektrolyten in die Kammer einbringt und die Kammer unter Druck verschließt.

## Beschreibung

Die vorliegende Erfindung betrifft eine bedruckte Bezugselektrode sowie ein Verfahren zu deren Herstellung.

Für die kontinuierliche Überwachung von Prozessen werden oft potenziometrische Messzellen und insbesondere pH-Messketten eingesetzt. Derartige elektrochemische Messzellen bestehen in der Regel aus einer Messelektrode mit ionensensitiver Membran und einer Bezugselektrode. Die Bezugselektrode kann getrennt ausgebildet und über eine Brücke mit der Messelektrode verbunden sein. Die Messelektrode und Bezugselektrode können zusammen auch in Form von Einstabmessketten vorliegen.

Eine wesentliche Voraussetzung für exakte und stabile Messungen in solchen Prozessen ist, dass die Bezugselektrode oder das Bezugselement eine über lange Zeit konstante Halbzellenspannung abgibt.

Es sind zahlreiche Bezugselektroden in vielfältiger Ausgestaltung bekannt. Sie bestehen meist aus einem Ableitelement in Form einer Elektrode zweiter Art, die in einen für die Bezugselektrode potenzialbestimmenden Bezugselektrolyten eintaucht. Der Bezugselektrolyt ist in den meisten Fällen eine konzentrierte Kaliumchloridlösung. Der elektrolytische Kontakt zwischen dem Ableitelement und dem Messmedium erfolgt durch ein in der Gehäusewand angeordnetes Diaphragma, z.B. einen porösen Keramikstift. Durch Verschmutzung des Diaphragmas durch das Messmedium oder durch das Eindringen von Messmedium in den Bezugselektrolyten kann es zu Fehlpotenzialen und damit zu einer Verfälschung der Messresultate kommen. Das Eindringen von Messmedium kann hierbei in zweierlei Hinsicht zu Fehlpotenzialen führen. Erstens durch die Verdünnung des potenzialbestimmenden Elektrolyten, was zu einer Abnahme Elektrolytkonzentration allgemein und im Falle einer Elektrode 2. Art zu einer Abnahme der potenzialbestimmenden Halogenidkonzentration führen kann und zweitens durch eindringende Elektrodengifte wie z.B. Sulfide, welche die Natur des Elementes 2. Art z.B. durch Bildung eines Ag/AgS-Elementes und somit dessen Standardpotenzial verändern können.

Dies ist insbesondere dann der Fall, wenn das Messmedium z.B. durch Druckaufschlag oder durch den statistischen Druck des Messmediums am Ort der Messkette einen höheren Druck aufweist als der Bezugselektrolyt. In diesem schlimmsten Falle ist mit konvektiven Stoffströmen ins Referenzsystem und entsprechend mit besonders schneller Vergiftung und schnellen Potenzialänderungen für die Referenzhalbzelle zu rechnen.

Um dies zu verhindern, wird der Referenzraum oft mit Druck beaufschlagt, sodass der Innendruck des Referenzraumes sicher höher ist als der Druck des Messmediums, um mindestens Verschmutzung durch konvektive Stoffströme zu vermeiden. Ferner erreicht man dadurch, dass während der Messung kontinuierlich Elektrolyt aus dem Referenzraum ausfließt, was für das Diaphragma reinigende Wirkung zeigt und so auch Fehlpotenziale durch Verschmutzung des Diaphragmas mit Messmedium zu minimieren vermag. Schließlich nicht zu vergessen ist, dass auf diese Weise eine Elektrode mit auslaufendem Elektrolyten erhalten wird, bei welcher der Stromkreis durch konvektiv transportierte lonen geschlossen wird und Diffusionsspannungen am Diaphragma, welche oftmals eine weitere Fehlerquelle bei potenziometrischen Messungen darstellen, minimiert werden können.

Die Druckbeaufschlagung erfolgte in der Vergangenheit durch verschiedene Methoden. Die älteste bekannte Methode ist die des Druckmessgebers, einer bedruckbaren Armatur für die Messkette, in welche die Elektrode mit offenem Referenzraum eingebaut wird. Der hier beaufschlagte Druck überträgt sich aufgrund des offenen Referenzraumes auf den Bezugselektrolyten und garantiert so einen Überdruck zum Messmedium. Nachteilig an dieser Methode ist der hierfür notwendige teure Druckmessgeber (Armatur), in welchen die Elektrode einzubauen ist. Im Falle von unverdickten Elektrolyten kommt hinzu, dass die Elektrode durch Nachfüllen des Elektrolyten öfters gewartet werden muss.

Aufgrund dieser Nachteile wurden wartungsarme Elektroden entwickelt, bei welchen der druckbeaufschlagte Elektrolyt verdickt wurde und somit langsamer ausfließt. Solche Elektroden wurden als wartungsarm so ausgebildet, dass kein Elektrolyt mehr nachgefüllt werden kann.

DE 37 02 501 beschreibt eine pH-Messkette mit druckbeaufschlagter Bezugselektrode für mikrobiologische Prozesse. In der pH-Messkette ist oberhalb des Bezugselektrolyten ein Hohlraum angeordnet, in dem sich ein unter Druck stehendes Gas befindet, das mit dem Bezugselektrolyten in Verbindung steht. Durch das Gas in der Kammer des Referenzraumes kann ein Innendruck aufrechterhalten werden, der größer ist als der des Messmediums. In den Hohlraum mündet eine gasdicht in der Wandung des Gehäuses befestigte Zuführung für das Gas ein, die gasdicht verschließbar ist. In einer bevorzugten Ausführungsform ist diese Zuführung als Pt-Kapillare ausgebildet, welche nach Zuführung des Gases durch Abklemmen mit einer Zange verschlossen wird.

In DE 100 53 979 A1 werden bedruckte Referenzräume beschrieben, bei welchen der Druck durch gespannte federnde elastische Körper im Referenzraum erzeugt wird. Als elastische Körper werden entweder eine metallische Feder oder aber polymerer Schaum beschrieben. Zweck dieser Ausführung ist es, im Gegensatz zu DE 37 02 501 eine stabile und zuverlässige Messkette bereitzustellen, bei der eine Verletzungsgefahr möglichst vermieden wird. Beim Bruch der Elektrode würde sich der gespannte federnde Körper im Gegensatz zu komprimierter Luft nur langsam entspannen und ein Herumfliegen von Glasbruchstücken vermeiden. Ein weiterer Vorteil dieser Ausgestaltung ist laut Anmelder, dass im Gegensatz zu DE 37 02 501 keine teure Pt-Kapillare ins Glas der Referenzkammer eingebaut werden muss.

US 2002/0189943 A1 beschreibt einen bedruckten Elektrolytraum, in welchem der Druck über einen auf den Elektrolyten wirkenden Kolben aufgebaut wird. Der Kolben kann durch eine am Kolben befestigte Feder oder durch eine externe Kraft getrieben werden.

Eine weitere Art, einen Elektrolytfluss ins Messmedium sicherzustellen, ist das Zwischenschalten einer flüssigkeitsfördernden Pumpe zwischen Elektrolytraum und Messmedium, wobei hier sicherzustellen ist, dass die Förderrate gleichmäßig und klein ist, um ein allzu schnelles Auslaufen an Elektrolyt zu vermeiden.

WO 02/057765 A2 erwähnt hier die Verwendung einer Mikropumpe, wie sie in der Mikrosystemtechnik seit längerem bekannt sind. Diese Methode weist alle Vorzüge eines bedruckten Referenzraumes auf, da auch hier ein Ausfluss an Bezugselektrolyt sichergestellt wird, aber ohne den eigentlichen Referenzelektrolytraum unter Druck zu halten.

Alle bisherigen Methoden sind jedoch technisch aufwändig oder mit nicht unwesentlichen Kosten verbunden. Es bestand daher weiterhin das Bedürfnis ein Verfahren zu finden, mit dem Elektroden auf einfache Weise bedruckt werden können. Eine Aufgabe der vorliegenden Erfindung war es daher, ein Bedruckungsverfahren für Bezugselektroden bereitzustellen, welches einfach durchführbar ist, keine technisch aufwändigen Apparaturen oder Hilfsmittel benötigt und welches eine kostengünstige Herstellung von Elektroden ermöglicht.

Diese Aufgabe wird erfindungsgemäß gelöst durch ein Verfahren zur Herstellung einer Bezugselektrode, wobei die Bezugselektrode eine Kammer umfasst, die einen Bezugselektrolyten aufweist, wobei ein Teil der Wandung der Kammer aus porösem Material zum Inkontaktbringen der Bezugselektrode mit einem Messmedium ausgebildet ist, und wobei die Kammer unter Überdruck steht, welches dadurch gekennzeichnet ist, dass man zur Erzeugung des Überdrucks in der Bezugselektrode ein Gas oder/und eine Flüssigkeit durch das poröse Material der Wandung in die Kammer einbringt.

Erfindungsgemäß wird im Gegensatz zum Stand der Technik der Druckaufschlag in eine geschlossene Kammer der Bezugselektrode, insbesondere einen geschlossenen Referenzraum durch das poröse Diaphragma direkt bewerktstelligt. Dadurch sind, im Gegensatz zu den Bedruckungsmethoden des Standes der Technik, keine zusätzlichen Zuleitungen nötig und es kann beispielsweise auf die Verwendung einer teuren Pt-Kapillare verzichtet werden. Das Druckmedium wird erfindungsgemäß vielmehr direkt über einen Teil der Wandung der Bezugselektrode eingebracht. Ein weiterer wesentlicher Vorteil dieser Bedruckungsmethode ist die Tatsache, dass die Bedruckung parallel durchgeführt werden kann, also eine Vielzahl von Referenzelektroden gleichzeitig in einem Arbeitsgang bedruckt werden kann. Eine individuelle Behandlung jeder einzelnen Bezugselektrode (beispielsweise das Verschließen der Pt-Kapillare mit einer Zange) ist nicht erforderlich. Eine parallele Bedruckung kann bevorzugt dadurch bewerkstelligt werden, dass eine Anzahl von geschlossenen Referenzräumen in einen Druckbehälter eingelegt oder eingeschraubt werden und anschließend gleichzeitig druckbeaufschlagt werden. Eine solche serienmäßige Produkten ist einfach, robust und kostengünstig.

Erfindungsgemäß wird eine bedruckte Bezugselektrode bereitgestellt. Dies bedeutet insbesondere, dass die Bezugselektrode eine Kammer umfasst, welche unter Überdruck steht. Unter Überdruck wird jeder Druck von ≥ 1,1 bar verstanden, wobei die Kammer insbesondere einen Druck von ≥ 1,5 bar, mehr bevorzugt ≥ 2 bar, insbesondere ≥ 3 bar und mehr bevorzugt ≥ 4 bar aufweist. Der Druck in der Bezugselektrode kann theoretisch beliebig groß sein, bevorzugt ist er aufgrund technischer Überlegungen jedoch maximal 20 bar, mehr bevorzugt maximal 10 bar, insbesondere maximal 8 bar und am meisten bevorzugt maximal 6 bar.

Der Überdruck in der Kammer kann bezogen auf die beabsichtigte Verwendung bevorzugt so eingestellt werden, dass der Druck in der Kammer größer als der Druck des vorgesehenen Messmediums ist. Bevorzugt beträgt der Druck in der Kammer mindestens das 1,1-fache, mehr bevorzugt mindestens das 1,5-fache, noch mehr bevorzugt mindestens das 2-fache und am meisten bevorzugt das 4-fache des Drucks des Messmediums.

Der Überdruck in der Bezugselektrode wird erfindungsgemäß durch ein Druckmedium erzeugt, insbesondere durch ein Gas oder/und eine Flüssigkeit. Aus technischen Überlegungen sind Sauerstoff, Stickstoff oder/und Luft bevorzugte Gase. Es ist aber auch möglich, den Überdruck durch Einbringen einer Flüssigkeit unter Druck in die Kammer der Bezugselektrode bereitzustellen.

Besonders bevorzugt weist das poröse Material der Wandung der Kammer eine höhere Permeabilität für das Druckmedium als für den Bezugselektrolyten auf. Insbesondere eine mindestens zweifache, mehr bevorzugt eine mindestens fünffache, insbesondere eine mindestens 50-fache, noch mehr bevorzugt eine mindestens 100-fache, besonders bevorzugt eine mindestens 500-fache und am meisten bevorzugt eine mindestens 1000-fache Permeabilität.

Das Druckmedium, insbesondere eine als Druckmedium verwendete Flüssigkeit weist vorzugsweise eine Viskosität auf, die kleiner als die Viskosität des Bezugselektrolyten ist, insbesondere mindestens 100-mal kleiner und bevorzugt mindestens 1000 mal kleiner als die Viskosität des Bezugselektrolyten. Bevorzugt weist die Flüssigkeit eine Viskosität von mindestens 0,1 mPa· s, mehr bevorzugt von mindestens 1 mPa · s und bis zu 5.000 mPa · s, mehr bevorzugt bis zu 1.000 mPa · s, noch mehr bevorzugt von bis zu 500 mPa · s, insbesondere von bis zu 100 mPa · s und besonders bevorzugt von bis zu 5 mPa · s auf. Besonders bevorzugt weist das Druckmedium eine Viskosität zwischen 0,3 und 1 mPa . s auf. Alle Viskositätsangaben hierin beziehen sich auf die dynamische Viskosität bei einer Messtemperatur von 25 °C. Als Druck-vermittelnde Flüssigkeiten können beliebige Flüssigkeiten eingesetzt werden, also sowohl anorganische als auch organische Flüssigkeiten. Besonders bevorzugt wird Wasser oder ein Monoalkohol mit 1 bis 10 Kohlenstoffatomen verwendet. Weitere geeignete Flüssigkeiten, die zur Druckerzeugung bevorzugt verwendet werden können sind Aldehyde, Ketone oder organische Verbindungen mit 1 bis 10 Kohlenstoffatomen, insbesondere lineare, verzweigte oder cyclische Verbindungen, welche gesättigt oder ungesättigt sein können.

Bevorzugte Lösungsmittel umfassen beispielsweise Methanol, Ethanol, 1-Propanol, 2-Propanol, 1-Butanol, 2-Butanol, 2-Methyl-2-propanol, Allylalkohol, 1-Pentanol, 2-Pentanol, 3-Pentanol, 1-Heptanol, 2-Heptanol, 3-Heptanol, 4-Heptanol, 1-Octanol, 1-Decanol, Cyclohexanol, Aceton, Propanal, 2-Butanon, Dibutylether, Acetonitril, Tetrahydrofuran, Ethylacetat, Cyclopentan, Cyclohexan, Hexan, Octan, o-Xylol, m-Xylol, p-Xylol und andere.

Erfindungsgemäß wird das Druckmedium direkt über einen Teil der Wandung der Kammer aus porösem Material in die Bezugselektrode eingebracht. Der Teil der Wandung ist gleichzeitig für das Inkontaktbringen der Bezugselektrode mit einem Messmedium ausgebildet. Das poröse Material weist dabei vorzugsweise Porengrößen im Bereich von 0,1 bis 10 µm (angegeben als Porenradius), mehr bevorzugt von 1 bis 5 µm (angegeben als Porenradius) auf. Geeignete Materialien für das poröse Material sind beispielsweise Zirkonoxid oder Silicate sowie andere bekannte poröse "liquid junctions", wie z.B. poröse gesinterte Materialien, Holz und natürliche Fasermaterialien, Asbestfaserbündel, Faserbündel, insbesondere aus Cellulosen oder/und Watte, Wattebüschel, verdrillte Drähte, z.B. verdrillte Pt-Drähte, poröse Gläser, z.B. CPG ("Controlled Pore Glass"), Glassiebe, poröse Kieselgele oder gesinterte poröse Polymere, wie z.B. Teflon oder Polypropylen. Bevorzugt sind 0,1 % bis 50 %, insbesondere 1 % bis 10 % der Wandung der Kammer aus porösem Material. Besonders bevorzugt besteht das poröse Material aus einem zylindrischen Stab (z.B. mit einem Durchmesser von 0,5 mm bis 1,5 mm, insbesondere 0,8 mm bis 1,2 mm). Das poröse Material hat dabei bevorzugt einen Porenradius von 0,5 µm bis 1 µm und eine Porosität von 25 % bis 40 %.

Erfindungsgemäß wird ein unterschiedlicher Materialfluss beim Bedrucken bzw. Druckaufschlag der Bezugselektrode durch das Bedruckungsmedium, insbesondere ein Gas oder eine Flüssigkeit, und beim Gebrauch der Elektrode, bei dem Elektrolyt aus dem Referenzelektrolyten in entgegengesetzter Richtung zur Bedruckungsrichtung ausläuft, erzielt. Dabei werden geeigneterweise Porengröße und Permeabilität bzw. Viskosität von Bezugselektrolyt und Bedruckungsmedium so aufeinander eingestellt, dass einerseits eine vernünftig kurze Bedruckungszeit, insbesondere von ca. 1 bis 24 Stunden eingehalten werden kann und andererseits eine ausreichende lange Lebensdauer der Elektrode gewährleistet wird, wobei der Elektrolyt nur langsam auslaufen sollte (z.B. mit einer Auslaufrate von < 5 ml/Jahr). Die Durchflussgeschwindigkeit durch einen porösen Körper kann durch die Gleichung von Hagen-Poiseuille beschrieben werden. Danach ist die Durchflussgeschwindigkeit dV/dt umgekehrt proportional zur dynamischen Viskosität η und direkt proportional zur angelegten Druckdifferenz Δp. Diese Gleichung gilt sowohl beim Bedrucken als auch beim Auslaufen. Beim Bedrucken wird üblicherweise ein hoher Druck angelegt, beispielsweise > 10 bar, mehr bevorzugt > 20 bar und insbesondere mindestens 40 bar, um eine kurze Bedruckungszeit zu erhalten, wobei η = Viskosität des Bedruckungsmediums. Beim Auslaufen stellt Δp die Druckdifferenz zwischen Referenzelektrode und Messmedium dar und **η** = die Viskosität des resultierenden Elektrolyten (vorgelegter Elektrolyt vermischt mit Bedruckungsmedium).

Erfindungsgemäß wird durch das Zurücklaufen des Bezugselektrolyten nach dem Bedrucken in den porösen Hohlkörper eine Art Rückschlagventil gebildet. In einer weiteren bevorzugten Ausführungsform enthält der Elektrolyt Polymere, insbesondere lineare Polymere, welche zum Verdicken des Elektrolyten eingesetzt werden und aufgrund ihrer Molekulargröße nicht durch die Poren des poröse Diaphragmas gelangen können. In diesem Fall bildet das Diaphragma eine Barriere für das Polymer bzw. das Polymer trägt zu einem osmotischen Druck bei, welcher so in der Bezugselektrolytkammer aufgebaut wird und dem Auslaufen entgegenwirkt. Für einen Porenradius von beispielsweise 0,4 bis 0,6 µm wurde festgestellt, dass eine Molekulargröße Mw = 500.000 oder größer ausreichend ist, um eine solche "Verstopfung" des Diaphragmas zu erzielen.

Da erfindungsgemäß der Überdruck über einen Teil der Wandung eingebracht wird, kann es sich bei der Bezugselektrode um ein System mit einem geschlossenen Gehäuse handeln, beispielsweise einem geschlossenen Gehäuse aus Glas oder Kunststoff. Die Bezugselektrode weist deshalb vorzugsweise keine weiteren Zuleitungen oder Öffnungen auf.

Die mit Druck zu beaufschlagende Kammer der Bezugselektrode weist einen Bezugselektrolyten auf. Vorzugsweise ist der Bezugselektrolyt ein fließfähiger und besonders bevorzugt ein fließfähiger verdickter Elektrolyt. Beim Druckaufschlag mit dem Druckmedium wird der Bezugselektrolyt verdrängt, sodass das Druckmedium in die Kammer eindringen kann. Aufgrund der Schwerkraft kann nach erfolgter Druckbeaufschlagung der Bezugselektrolyt wieder über die Diaphragmaöffnung zurückfließen und somit ein Austreten des Druckmediums durch das poröse Material des Diaphragmas verhindern.

Für die erfindungsgemäße Art der Bedruckung ist es besonders vorteilhaft, wenn der Bezugselektrolyt und das Bedruckungsmedium so ausgewählt sind, dass sich die Permeabilität der beiden Materialien für das poröse Material so stark unterscheidet, dass der Bezugselektrolyt nach dem Druckaufbau in der Bezugselektrolytkammer wieder zurückfließen kann und das poröse Material durch den Überdruck in der Kammer ähnlich einem Rückschlagventil verstopft wird, sodass ein Austreten des Druckmediums vermieden wird. Der Bezugselektrolyt weist vorzugsweise eine Viskosität von mindestens 20 mPa· s, mehr bevorzugt mindestens 40 mPa . s, mehr bevorzugt mindestens 100 mPa . s und insbesondere mindestens 1000 mPa . s auf und bis zu 20 Pa . s, insbesondere bis zu 5 Pa . s. Schlecht fließende Bezugselektrolyte können durch erhöhte Temperatur beim Bedrucken, z.B. mindestens 50 °C aufgrund ihrer Gravitation fließfähig gemacht werden und somit nach Befüllen der Referenzelektrode mit dem Druckmedium zurück über das poröse Diaphragma fließen und dieses verschließen. Die Viskosität des Bezugselektrolyten wird dabei vorteilhafterweise an die Diaphragmaporosität angepasst. Eine solche Anpassung erfolgt bevorzugt dadurch, dass dem Bezugselektrolyten ein Verdickungsmittel zugesetzt ist. Als Bezugselektrolyt selbst wird vorzugsweise eine wässrige KCI-Lösung eingesetzt. Als Verdickungsmittel werden vorzugsweise lineare Polymere, insbesondere hydrophile lineare Polymere verwendet. Beispiele für solche Verdicker sind lineare Polyacrylate und deren Derivate, insbesondere wasserlösliche Polyacrylate, Cellulosederivate, Stärkederivate, Dextrosen, Polyvinylalkohole, Poly-(N-Vinylpyrrolidone), Poly-(2-vinylpyridine), Polyethylenoxide, Polyethylenglykole und Derivate davon, wie beispielsweise Polyethylenglykolmonomethylether, Polyvinylacetate, Polymaleinsäuren, Polyvinylmethylether, Gelatine, Agar-Agar und Alginate. Besonders bevorzugt werden Polymere mit Kettenlängen eingesetzt, die nur schlecht und besonders bevorzugt überhaupt nicht durch die Poren des porösen Diaphragmas durchtreten können. Bevorzugt weisen die als Verdicker verwendeten Polymere deshalb ein Molekulargewicht Mw von ≥ 100.000 Da, insbesondere ≥ 200.000 Da und besonders bevorzugt von ≥ 500.000 Da auf. Für ein Zr₂O-Diaphragma mit einem Porenradius von 0,1 bis 1 µm, insbesondere von 0,4 bis 0,6 µm wurde beispielsweise für das Verdickersystem pDMA bei einem Molekulargewicht Mw > 500.000 ein Durchdringen vollständig verhindert.

Es ist auch möglich, den Bezugselektrolyten mit viskosen organischen Lösungsmitteln, insbesondere wasserlöslichen viskosen organischen Lösungsmitteln, wie etwa Di- oder Trialkoholen (z.B. Glycerin, Ethylenglykol oder Propylenglykol), Polyolen (z.B. hydroxyendständige Polyester oder/und Polyether, wie sie als Grundbaustoffe bei der Polyurethan-Herstellung Verwendung finden) oder Aminen (z.B. Triethanolamin) zu verdicken. Solche organischen Lösungsmittel weisen bevorzugt eine Viskosität von > 40 mPa . s auf. Weitere Beispiele für als Verdickungsmittel geeignete organische Lösungsmittel sind Cyclohexanol und Diethanolamin.

Ein besonders bevorzugtes Verdickungsmittel ist lineares Polydimethylacrylamid (vgl. US 6,468,408; pDMA). Lineares Polydimethylacrylamid ist verdickend und fließfähig und hat den Vorteil, Acrylamid-frei und somit wesentlich weniger giftig zu sein. Polydimethylacrylamid weist eine gute Hydrolysebeständigkeit und eine gute Säure- und Lösungsmittelverträglichkeit auf und wird durch bioaktive Stoffe und Enzyme nur wenig angegriffen. Dies ist insbesondere beim Einsatz in Bioprozessen von Bedeutung, da einerseits Bakteriengifte in diesen Prozessen unerwünscht sind und andererseits sich das Polmyer durch die Bakterienenzyme aus diesen Prozessen nicht zu einem niederviskosen oder dünnflüssigen Elektrolyten abbauen darf. Die Säure- und Lösungsmittelresistenz hat vor allem Vorteile bei Messungen im chemischen Bereich, in denen viele Polymere durch Hydrolyse abgebaut werden oder in organischen Lösungsmitteln ausfallen können. Beides führt ebenfalls zum Verlust der für diese Anwendung notwendigen Viskosität des Elektrolyten und somit zu reduzierter Elektrodenlebensdauer.

Die Erfindung betrifft weiterhin ein Verfahren zur Herstellung einer Bezugselektrode, wobei die Bezugselektrode eine Kammer umfasst, die einen Bezugselektrolyten aufweist, wobei ein Teil der Wandung der Kammer aus porösem Material zum Inkontaktbringen der Bezugselektrode mit einem Messmedium ausgebildet ist und wobei die Kammer unter Überdruck steht, wobei das Verfahren dadurch gekennzeichnet ist, dass man den Bezugselektrolyten in die Kammer einbringt und die Kammer unter Druck verschließt. Auch mit dieser Ausführungsform des erfindungsgemäßen Verfahrens kann ein Referenzsystem bedruckt werden, ohne dass eine zusätzliche Zuführung zum Bedrucken erforderlich ist. Bei dieser Vorgehensweise wird die den Bezugselektrolyten enthaltende Kammer fertiggestellt, während sie unter Druck gehalten wird. Das Schließen der Kammer kann beispielsweise durch Verkleben oder Verschmelzen erfolgen. Insbesondere im Fall von zylindrischen Glaskörpern ist ein Verschmelzen bevorzugt. Ein Verfahrensschritt des Schließens der Kammer erfolgt dabei, indem von außen gerade der Druck angelegt wird, der schließlich in der Kammer enthalten sein soll. Vorzugsweise wird der letzte Fertigungsschritt des Schließens deshalb in einer Druckkammer durchgeführt. Während nun die Kammer und vorzugsweise die ganze Bezugselektrode unter Druck gehalten wird, wird die den Referenzelektrolyten enthaltende Kammer geschlossen, beispielsweise verklebt oder verschmolzen. Eine Zuführung zum nachträglichen Einbringen von Druck in die Bezugselektrode wird auch bei dieser Vorgehensweise nicht benötigt.

Ein weiterer Gegenstand der Erfindung ist eine Bezugselektrode, welche mit dem oben beschriebenen Verfahren erhältlich ist sowie eine eine solche Elektrode enthaltende Messkette. Die erfindungsgemäße Bezugselektrode weist insbesondere mit Ausnahme des Abschnitts aus porösem Material keine Öffnung oder Zuführung auf. Eine solche zusätzliche Öffnung oder Zuführung, wie im Stand der Technik beschrieben, ist bei den erfindungsgemäßen Bezugselektroden nicht erforderlich. Unter Öffnung oder Zuführung wird dabei auch eine inzwischen reversibel oder irreversibel verschlossene Zuführung verstanden, durch die Druck eingebracht werden konnte und die nach dem Bedrucken verschlossen, z.B. abgeschmolzen, wurde.

Die Erfindung betrifft weiterhin elektrochemische Messzellen, welche eine erfindungsgemäße Bezugselektrode umfassen. Beevorzugt sind z.B. Referenzsysteme, die in amperometrischen Sensoren, in der Voltametrie oder in Batterien, wie z.B. in Brennstoffzellen, zum Einsatz kommen und erfindungsgemäß bedruckt wurden. Weiterhin bevorzugt ist der Einsatz erfindungsgemäß bedruckter Bezugselektroden in potenziometrischen Messketten.

Die Erfindung wird durch die beigefügten Figuren und die folgenden Beispiele weiter erläutert.

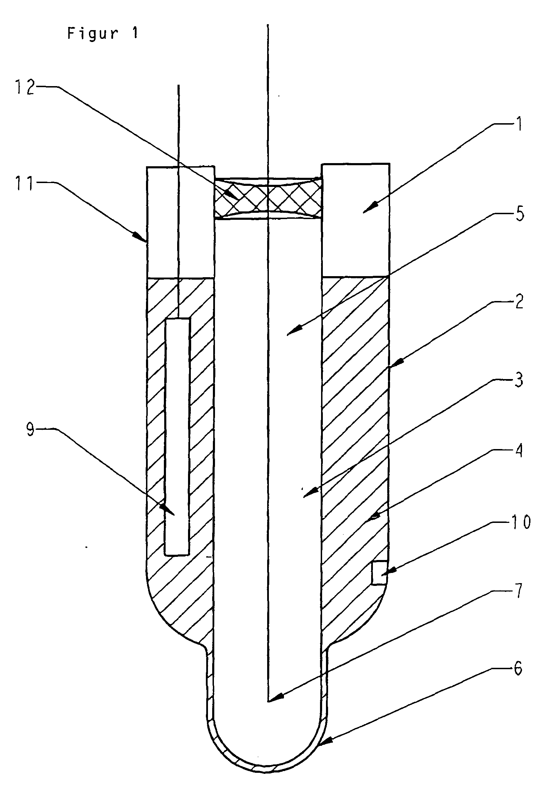

Figur 1 zeigt eine Elektrode mit geschlossenem Referenzraum, welcher einen verdickten, fließfähigen Bezugselektrolyten und ein poröses Diaphragma enthält.

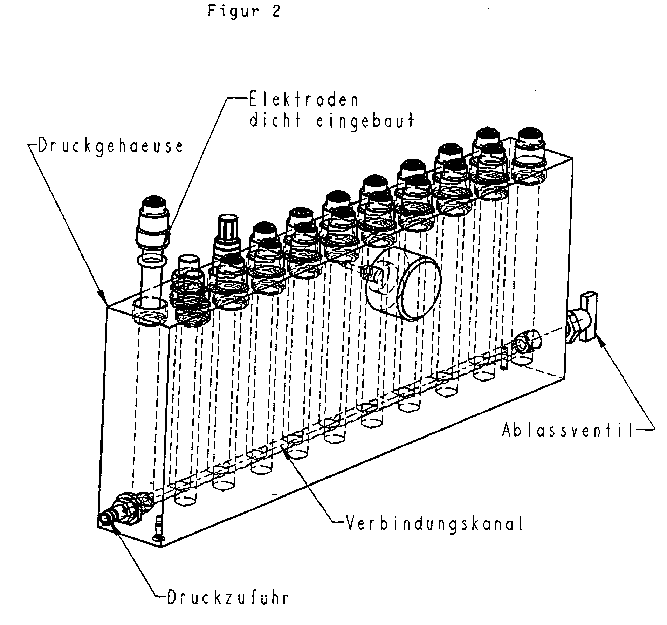

Figur 2 zeigt eine bevorzugte Apparatur zum Bedrucken des Elektrolytraums mit eingeschraubten Elektroden. Nur die Diaphragma-Öffnungen sind dem Druck ausgesetzt. Die Druckapparatur wird über Dichtringe zwischen Apparatur und Elektrodensteckköpfen, welche zur Apparatur herausragen, gedichtet.

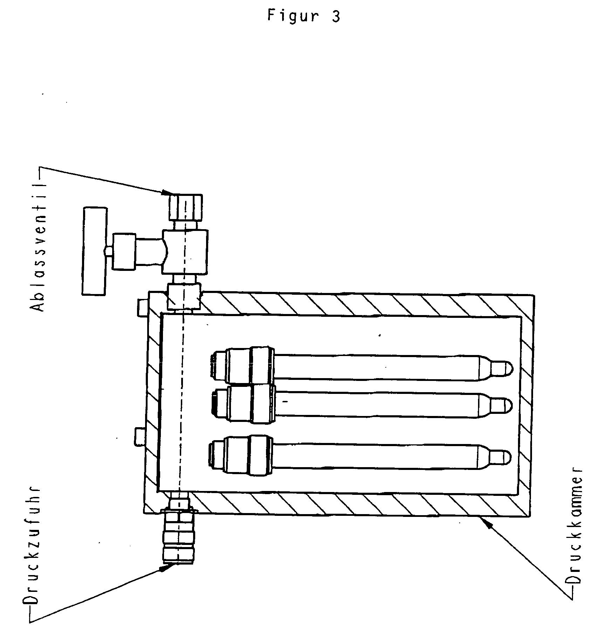

Figur 3 zeigt eine Druckapparatur, in welche ganze Elektroden eingestellt werden können.

### Beispiele

### Beispiel 1

| | |
|---|---|
| Poröses Diaphragma | Siliciumoxid mit Porenradien von 0,5 µm |
| Elektrolyt | 10 %-ige Polydimethylacrylamidlösung Polydimethylacrylamid mit einem MolGewicht (Molekulargewichts-Gewichtsmittel) Mw > 500.000 wie folgt hergestellt: |

50 g Dimethylacrylamid und 430 g deion Wasser und TEMED (Tetramethyl) werden durch Zugabe von Ammoniumpersulfatlösung radikalisch polymerisiert. Zu 450 g der resultierenden viskosen Polymerlösung (Mw > 500.000; GPC) werden 91,6 g KCI und 360,5 g Glycerin gegeben. Bei erhöhten Temperaturen neigt dieser Elektrolyt zu Polymerausfällungen. Diese Neigung wird durch hohe Salzkonzentrationen verstärkt. Mit 40 % Glycerin und obiger KCI-Menge können Elektrolyte erhalten werden, welche bis 135 °C stabil sind. Durch Erhöhung der Glycerinmenge bzw. Reduktion der

KCI-Menge kann die Temperaturbeständigkeit weiter erhöht werden. Ag/AgCl-Referenzsysteme mit diesem Elektrolyten weisen aufgrund der niedrigeren KCI-Konzentration zu herkömmlichen Elektrolyten (3 mol/l KCI ) eine Abweichung von ca 8 mV auf, d.h. der Nullpunkt solch einer Messkette in Puffer pH 7 ist um ca. 8 mV verschoben. Dieser kann durch entsprechende Anpassungen des Innenpuffers (Puffer im inneren Ableitsystem für die ionensensitive Membran) korrigiert werden.

Enzusammensetzung des Elektrolyten:

| | |
|---|---|
| Wassergehalt | ca. 43 % |
| Glyceringehalt | ca. 40 % |
| KCI-Konzentration in Wasser | 3,15 mol/l |

Herstellung der Elektroden:

Füllen des Referenzraumes mit Elektrolyt, wobei ein gasförmiger Hohlraum von 20 % des Referenzraumes auszubilden ist. Der gasförmige Hohlraum ist komprimierbar und hat bei Temperaturschwankungen den Zweck eines komprimierbaren Raumes, welcher hydraulische Drücke verhindert.

Waagrechtes Einstellen oder Einschrauben der Elektroden in die Bedruckungsapparatur.

Druckbeaufschlagung der Elektroden mit Stickstoff:
3,5 Min. 40 bar
über Nacht mit 10 bar

Es resultiert ein Elektrodenüberdruck von 4 bis 6 bar im Referenzraum mit einem Elektrolytausfluss von < 0,004 g*bar^{1*}h⁻¹.

Diese Elektrode ist besonders geeignet für die Kontrolle von Bioprozessen, in welchen nicht giftige, gegen Enzyme beständige Verdickungsmittel einzusetzen sind. Der auslaufende Elektrolyt zeigt reinigende Wirkung für das Diaphragma und minimiert die in Bioprozessen bekannten Diaphragmapotenziale, welche durch am Diaphragma absorbierte Eiweiße auftreten können.

### Beispiel 2

| | |
|---|---|
| Poröses Diaphragma | Zirkonoxid mit Porenradien von 8 µm |
| Referenzsystem | Glasmembran in gepuffertem Elektrolyten pH ca. 4,6 |
| Elektrolyt | Acetatgepufferte 10 %-ige Polydimethylacrylamidlösung Polydimethylacrylamid mit einem MolGewicht (Molekulargewichts-Gewichtsmittel) Mw > 800.000 wie folgt hergestellt: |

50 g Dimethylacrylamid und 430 g deion Wasser und TEMED (Tetramethyl) werden durch Zugabe von Ammoniumpersulfatlösung radikalisch polymerisiert. Zu 400 g der resultierenden viskosen Polymerlösung (Mw > 800.000, GPC) wird folgendes zugesetzt:
17,4 g deion Wasser
275,2 g Glycerin
82,00 g KCI
30,1 g Na-Acetat
30 g Eisessig

Endzusammensetzung des Elektrolyten pH 4,6:

| | |
|---|---|
| Wassergehalt: | ca. 45 % |
| Glyceringehalt | ca. 32 % |
| KCI-Konzentration in Wasser | ca. 2,81 mol/l |
| Acetatkonzentration in Wasser | ca. 1,88 mol/l |

Herstellung der Elektroden:

Füllen des Referenzraumes mit Elektrolyt, wobei ein gasförmiger Hohlraum von 20 % des Referenzraumes auszubilden ist. Der gasförmige Hohlraum ist komprimierbar und hat bei Temperaturschwankungen den Zweck eines komprimierbaren Raumes, welcher hydraulische Drücke verhindert.

Waagrechtes Einstellen oder Einschrauben der Elektroden in die Bedruckungsapparatur.

Druckbeaufschlagung der Elektroden mit Stickstoff:
3,5 Min. 40 bar
über Nacht mit 10 bar

Es resultiert ein Elektrodenüberdruck von 4 bis 6 bar im Referenzraum mit einem Elektrolytausfluss von < 0,005 g*bar^{1*}h⁻¹

Diese Elektrode ist besonders geeignet für die Kontrolle chemischer Prozesse. Das Referenzsystem ist ein hochohmiges pH-Referenzsystem, welches nur auf pH-Änderung des Elektrolyten reagiert. Vergiftet werden können solche Elektroden also vor allem durch Messmedien, welche einen anderen pH-Wert aufweisen als der Referenzelektrolyt. Nur durch Verdünnung des Referenzelektrolyten ändert sich der pH-Wert dieses Elektrolyten und somit das Referenzsignal der Referenzelektrode nur wenig. Ferner sind solche Referenzsysteme nur schwer zu vergiften, da es sich um eine pH-Referenz handelt und nicht um eine Referenz zweiter Art. Nachteilig an einer solchen Elektrodenanordnung ist die hohe Referenzimpedanz, welche den Einsatz von speziellen Transmittern mit entsprechend hochohmigen Eingängen erfordert.

Um mit solch einem Elektrolyten eine Elektrode mit Messkettennullpunkt pH 7 zu erhalten, ist die innere Ableitung (Glasmembran/innerer Elektrolyt/Ag/AgCl-Ableitsystem) entsprechend anzupassen bzw. der innere Elektrolyt ist ebenfalls mit einem pH um 4,6 herzustellen.

### Beispiel 3

Analog Beispiel 1 mit Hydroxypropylcellulose verdicktem Elektrolytsystem.

### Beispiel 4

Analog Beispiel 1: Elektrolyt 3M KCI verdickt mit 40 % Glycerin
Porenradius Diaphragma ca. 1 µm
Ausflussrate ca. 0,007 g/(bar*⁻¹h)

### Beispiel 5

Analog Beispiel 1 mit Polyacrylamid verdickt:
100 g Acrylamid, 900 g deion. Wasser, 223,7 g KCI und TEMED werden durch Zugabe von Ammoniumpersulfatlösung radikalisch polymerisiert.

Endkonzentration des Elektrolyten:

| | |
|---|---|
| Wassergehalt | ca. 73 % |
| Polymergehalt | ca. 10 % |
| KCI-Konzentration in Wasser | 3,0 mol/l |

10 %-ige Polyacrylamidlösung mit 3 mol/l KCI (Viskosität 3,5 bis 4,5 Pas) Auslaufrate ca. 0,005 g/bar/h.

## Patentansprüche

1. Verfahren zur Herstellung einer Bezugselektrode, wobei die Bezugselektrode eine Kammer umfasst, die einen Bezugselektrolyten aufweist, wobei ein Teil der Wandung der Kammer aus porösem Material zum Inkontaktbringen der Bezugselektrode mit einem Messmedium ausgebildet ist, und wobei die Kammer unter Überdruck steht,
**dadurch gekennzeichnet,**
**dass** man zur Erzeugung des Überdrucks in der Bezugselektrode ein Gas oder/und eine Flüssigkeit durch das poröse Material der Wandung in die Kammer einbringt.

2. Verfahren nach Anspruch 1,
**dadurch gekennzeichnet,**
**dass** die Permeabilität des porösen Materials der Wandung der Kammer für das zur Erzeugung des Überdrucks eingebrachte Gas oder/und Flüssigkeit höher ist als für den Bezugselektrolyten.

3. Verfahren nach Anspruch 1 oder 2,
**dadurch gekennzeichnet,**
**dass** die Kammer in der Bezugselektrode einen Druck von ≥ 1,1 bar aufweist.

4. Verfahren nach einem der Ansprüche 1 bis 3, wobei die Bezugselektrode eine Kammer umfasst, die einen Hohlraum und einen Bezugselektrolyten aufweist, wobei ein Teil der Wandung der Kammer aus porösem Material zum Inkontaktbringen der Bezugselektrode mit einem Messmedium ausgebildet ist, und wobei der Hohlraum ein unter Druck stehendes Gas aufweist,
**dadurch gekennzeichnet,**
**dass** man zur Erzeugung eines Drucks in der Bezugselektrode ein Gas durch das poröse Material der Wandung der Kammer in den Hohlraum einbringt.

5. Verfahren nach Anspruch 4,
**dadurch gekennzeichnet,**
**dass** das Gas in dem Hohlraum mit einem Druck von ≥ 1,1 bar vorliegt.

6. Verfahren zur Herstellung einer Bezugselektrode, wobei die Bezugselektrode eine Kammer umfasst, die einen Bezugselektrolyten aufweist, wobei ein Teil der Wandung der Kammer aus porösem Material zum Inkontaktbringen der Bezugselektrode mit einem Messmedium ausgebildet ist, und wobei die Kammer unter Überdruck steht,
**dadurch gekennzeichnet,**
**dass** man den Bezugselektrolyten in die Kammer einbringt und die Kammer unter Druck schließt.

7. Bezugselektrode, umfassend eine Kammer, die einen Bezugselektrolyten aufweist, wobei ein Teil der Wandung der Kammer aus porösem Material zum Inkontaktbringen der Bezugselektrode mit einem Messmedium ausgebildet ist und wobei die Kammer unter Überdruck steht,
**dadurch gekennzeichnet,**
**dass** die unter Überdruck stehende Kammer mit Ausnahme des Abschnitts aus porösem Material keine Öffnung aufweist.

8. Bezugselektrode, umfassend eine Kammer, die einen Bezugselektrolyten aufweist, wobei ein Teil der Wandung der Kammer aus porösem Material zum Inkontaktbringen der Bezugselektrode mit einem Messmedium ausgebildet ist und wobei die Kammer unter Überdruck steht, erhältlich durch das Verfahren nach einem der Ansprüche 1 bis 6.

9. Bezugselektrode nach Anspruch 7 oder 8, umfassend eine Kammer, die einen Hohlraum und einen Bezugselektrolyten aufweist, wobei ein Teil der Wandung der Kammer aus porösem Material zum Inkontaktbringen der Bezugselektrode mit einem Messmedium ausgebildet ist und wobei in dem Hohlraum ein unter Druck stehendes Gas enthalten ist.

10. Bezugselektrode nach Anspruch 9,
**dadurch gekennzeichnet,**
**dass** das in dem Hohlraum vorliegende Gas Sauerstoff, Stickstoff oder/und Luft ist.

11. Bezugselektrode nach einem der Ansprüche 7 bis 10,
**dadurch gekennzeichnet,**
**dass** sie einen zähflüssigen Bezugselektrolyten aufweist, welcher als Verdickungsmittel ein lineares Polymer enthält, insbesondere ein hydrophiles, lineares Polymer ausgewählt aus Polyacrylaten, Cellulosederivaten, Stärkederivaten, Dextrosen, Polyvinylalkohole, Poly-(N-Vinylpyrrolidone), Poly-(2-vinylpyridine), Polyethylenoxide, Polyethylenglykole und Derivate davon, wie beispielsweise Polyethylenglykolmonomethylether, Polyvinylacetate, Polymaleinsäuren, Polyvinylmethylether, Gelatine, Agar-Agar und Alginate.

12. Bezugselektrode nach einem der Ansprüche 7 bis 11,
**dadurch gekennzeichnet,**
**dass** der Bezugselektrolyt ein organisches Lösungsmittel als Verdicker enthält, insbesondere ausgewählt aus Glycerin, Ethylenglykol, Propylenglykol, Diethanolamin, Triethanolamin und hydroxyendständigen Polyethern oder/und Polyestern.

13. Bezugselektrode nach einem der Ansprüche 7 bis 12,
**dadurch gekennzeichnet,**
**dass** das poröse Material der Wandung ausgewählt ist aus Zirkonoxid oder Siliciumoxid mit Porenradien im Bereich von 0,1 bis 10 µm.

14. Elektrochemische Messzelle, umfassend eine Bezugselektrode nach einem der Ansprüche 7 bis 13, sowie eine Messelektrode.
